# EUROPEAN PATENT APPLICATION

(11) **EP 3 543 942 A1**
(43) Date of publication of application: **25.09.2019**
(21) Application number: 17871937.3
(22) Date of filing: 12.10.2017
(51) Int. Cl.: G06Q 30/02

(54) **ADVERTISING REMUNERATION CALCULATION SYSTEM AND TERMINAL DEVICE**

(30) Priority: 17.11.2016 JP 2016223926
(71) Applicant: Sony Corporation, Tokyo 108-0075 (JP)
(72) Inventor: SHUTO, Aya, Tokyo 108-0075 (JP); TEJIMA, Asuka, Tokyo 108-0075 (JP); HIRAI, Nobukazu, Tokyo 108-0075 (JP); KAINO, Yuriko, Tokyo 108-0075 (JP); OISHI, Yuki, Tokyo 108-0075 (JP); KURIHARA, Kenichi, Tokyo 108-0075 (JP); TAKAHASHI, Isao, Tokyo 108-0075 (JP); ASAOKA, Satoko, Tokyo 108-0075 (JP); TAKEUCHI, Taichi, Tokyo 108-0075 (JP); KAJIO, Yusuke, Tokyo 108-0075 (JP); WADA, Masaru, Tokyo 108-0075 (JP)
(74) Representative: D Young & Co LLP
(86) International application number: PCT/JP2017/036960
(87) International publication number: WO 2018/092474

(57) **Abstract**

An advertisement consideration calculating system according to an embodiment of the present disclosure includes: a receiving section that receives location information and time information of a moving body; and a determining section that determines a consideration for advertisement posting on the moving body on the basis of the location information and the time information received by the receiving section.

## Description

### Technical Field

The present disclosure relates to an advertisement consideration calculating system and a terminal unit.

### Background Art

Advertisements are provided in various public places. Recently, there are many cases where an advertisement is posted in a place that is not usually used as an advertising space. There are many cases of posting advertisements, for example, on a side face of a cargo bed of a large van body truck, side faces of a bus and a taxi, etc.

### Citation List

### Non Patent Literature

NPL 1: http://adtruck.jp/case.php

### Summary of the Invention

Incidentally, a moving body, such as those described above, does not always travel a place suitable for advertising or travel in a time slot suitable for advertising. Thus, it is difficult to realize cost-effectiveness as compared with a case where an advertisement is posted in a fixed place. Therefore, it is desirable to provide an advertisement consideration calculating system and a terminal unit that enable an advertiser to easily realize cost-effectiveness of advertisement posting on a moving body.

An advertisement consideration calculating system according to an embodiment of the present disclosure includes: a receiving section that receives location information and time information of a moving body; and a determining section that determines a consideration for advertisement posting on the moving body on the basis of the location information and the time information received by the receiving section.

In the advertisement consideration calculating system according to the embodiment of the present disclosure, the consideration for advertisement posting on the moving body is determined on the basis of the location information and the time information of the moving body. Accordingly, it is possible for an advertiser to pay, as an advertisement posting fee, a consideration in accordance with the value of advertising in a traveling place and a time slot of the moving body with an advertisement posted thereon.

A terminal unit according to an embodiment of the present disclosure includes: a transmitting section that transmits location information and time information of a moving body to an external device that determines a consideration for advertisement posting on the moving body on the basis of the location information and the time information; and a receiving section that receives information on the consideration from the external device.

In the terminal unit according to the embodiment of the present disclosure, if the location information and the time information of the moving body are transmitted to the external device, information on a consideration for advertisement posting on the moving body determined on the basis of the location information and the time information is obtained from the external device. Accordingly, it is possible for an advertiser to pay a user of the moving body, as an advertisement posting fee, a consideration in accordance with the value of advertising in a traveling place and a time slot of the moving body with an advertisement posted thereon.

In the advertisement consideration calculating system according to the embodiment of the present disclosure, the consideration for advertisement posting on the moving body is configured to be determined on the basis of the location information and the time information is obtained from the external device, and therefore, it is possible for the advertiser to pay a consideration in accordance with the value of advertising as an advertisement posting fee. Consequently, it is possible to easily realize the cost-effectiveness of advertisement posting on the moving body. It is to be noted that the effects described here are not necessarily limitative, and may be any of effects described in this specification.

### Brief Description of Drawings

FIG. 1 is a diagram illustrating a schematic configuration example of an advertisement consideration calculating system according to an embodiment of the present disclosure.
FIG. 2 is a diagram illustrating a cross-sectional configuration example of an information recording layer.
FIG. 3 is a diagram illustrating an example of a functional block of a data server unit illustrated in FIG. 1.
FIG. 4 is a diagram illustrating a configuration example of a database regarding request data illustrated in FIG. 3.
FIG. 5 is a diagram illustrating a configuration example of a database regarding point data illustrated in FIG. 3.
FIG. 6 is a diagram illustrating a detailed example of point data illustrated in FIG. 5.
FIG. 7 is a diagram illustrating a configuration example of a database regarding registration data illustrated in FIG. 3.
FIG. 8 is a diagram illustrating a configuration example of a database regarding traveling data illustrated in FIG. 3.
FIG. 9 is a diagram illustrating a configuration example of a database regarding history data illustrated in FIG. 3.
FIG. 10 is a diagram illustrating a configuration example of a database regarding consideration data illustrated in FIG. 3.
FIG. 11 is a diagram illustrating a configuration example of a database regarding printing office data illustrated in FIG. 3.
FIG. 12 is a diagram illustrating an example of a functional block of a printer unit illustrated in FIG. 1.
FIG. 13 is a diagram illustrating an example of a functional block of a web server unit illustrated in FIG. 1.
FIG. 14 is a diagram illustrating an example of a functional block of a terminal unit for an advertiser illustrated in FIG. 1.
FIG. 15 is a diagram illustrating an example of a functional block of a terminal unit for a driver illustrated in FIG. 1.
FIG. 16 is a diagram illustrating an example of the processing procedure at the time of entry of registration data in the advertisement consideration calculating system illustrated in FIG. 1.
FIG. 17 is a diagram illustrating an example of the processing procedure at the time of entry of request data and point data in the advertisement consideration calculating system illustrated in FIG. 1.
FIG. 18 is a diagram illustrating an example of the processing procedure at the time of determination of a consideration in the advertisement consideration calculating system illustrated in FIG. 1.
FIG. 19 is a diagram illustrating an example of the processing procedure at the time of viewing of the point data in the advertisement consideration calculating system illustrated in FIG. 1.

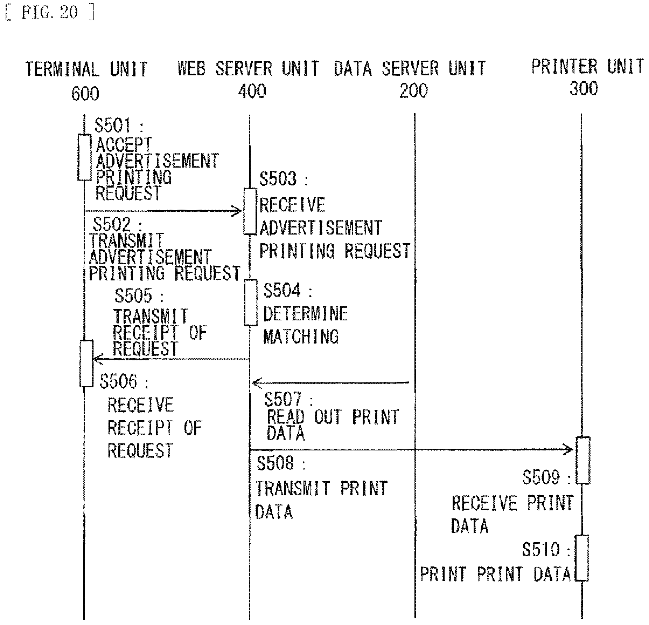

FIG. 20 is a diagram illustrating an example of the processing procedure at the time of request for printing in the advertisement consideration calculating system illustrated in FIG. 1.
FIG. 21 is a diagram illustrating a modification example of a schematic configuration of the advertisement consideration calculating system illustrated in FIG. 1. Modes for Carrying Out the Invention

In the following, some embodiments of the present disclosure are described in detail with reference to the drawings. The following description is a specific example of the present disclosure, and the present disclosure is not limited by an aspect described below. It is to be noted that description is given in the following order.

### 1. Embodiment

Example of an advertisement printed on a moving body on the basis of a request from an advertiser

### 2. Modification Examples

Modification Example A: Example of an advertisement printed on a moving body on the basis of a request from a driver
Modification Example B: Example of an advertisement pasted on a moving body

### <Embodiment>

### [Configuration]

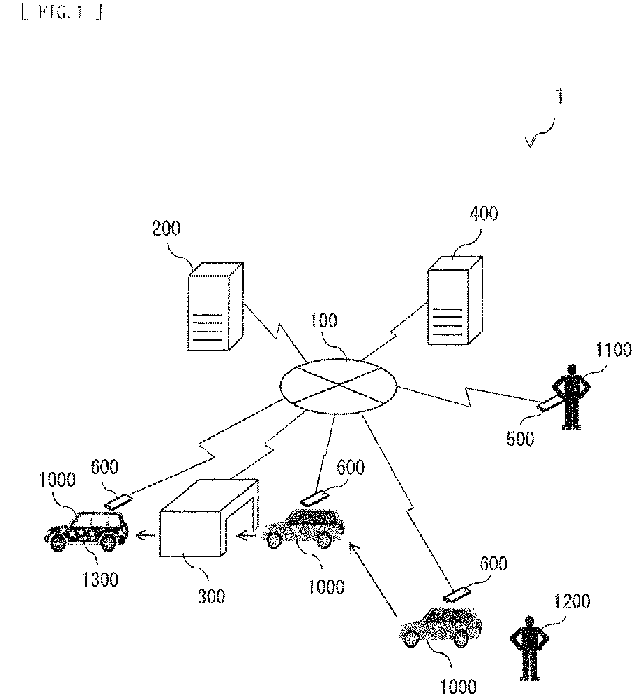

An advertisement consideration calculating system 1 according to an embodiment of the present disclosure is described. FIG. 1 illustrates a schematic configuration example of the advertisement consideration calculating system 1 according to the embodiment. The advertisement consideration calculating system 1 is a system that determines an advertisement posting fee to be paid to a driver 1200 on the basis of traveling data of a moving body 1000 with an advertisement printed thereon on the basis of a request from an advertiser 1100. In the following, the advertisement printed on the moving body 1000 is referred to as "the advertisement 1300" accordingly.

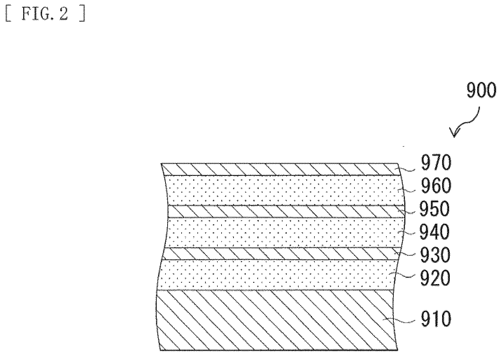

The advertisement 1300 includes, for example, information that the advertiser 1100 that is a sender has produced with intent to affect the attitude and behavior of consumers that are receivers. Besides such information, the advertisement 1300 may include, for example, a design (for example, an illustration, a photo, etc.) that attract consumers. The moving body 1000 is, for example, an automobile for business use, such as a bus, a taxi, a truck, or a rental car, or an automobile for personal use, such as a minivan or a sport utility vehicle (SUV). The advertisement 1300 is provided, for example, on the side face of a cargo bed of a large van body truck or on the side face of a bus, a taxi, a rental car, a minivan, an SUV, etc. A printing surface of the moving body 1000 has, for example, an information recording layer 900 illustrated in FIG. 2.

The information recording layer 900 is where a variety of information is visibly recorded. The information recording layer 900 includes, for example, a base 910, recording layers 920, 940, and 960, heat insulating layers 930 and 950, and a protective layer 970. The recording layer 920, the heat insulating layer 930, the recording layer 940, the heat insulating layer 950, the recording layer 960, and the protective layer 970 are formed on a surface of the base 910 in this order.

The base 910 serves as a substrate for forming layers on its surface. The base 910 may be either a light transmissive one or not a light transmissive one. In a case where the base 910 is not a light transmissive one, the surface color of the base 910 may be, for example, white, or may be a color other than white.

The recording layers 920, 940, and 960 are able to reversibly change their states between a colored state and a decolored state. The recording layers 920, 940, and 960 are configured to differ from one another in color when they are in the colored state. Specifically, in this example, the recording layer 920 is able to exhibit magenta color; the recording layer 940 is able to exhibit cyan color; the recording layer 960 is able to exhibit yellow color. It is to be noted that the recording layers 920, 940, and 960 are not limited to the foregoing example, and the three recording layers 920, 940, and 960 may have any correspondence relationship to the three colors (magenta, cyan, and yellow). Furthermore, the recording layers 920, 940, and 960 become transparent when they are in the decolored state. Accordingly, the information recording layer 900 allows for recording of information using a wide gamut of colors.

The recording layers 920, 940, and 960 each include, for example, leuco dye. In this case, the recording layers 920, 940, and 960 each include, for example, developer, a photothermal conversion material, and a polymer in addition to the leuco dye. The leuco dye is bound to the developer by heat and goes into a colored state, or is separated from the developer and goes into a decolored state. Respective leuco dyes of the three recording layers 920, 940, and 960 differ from one another in color when they are in the colored state. The photothermal conversion material absorbs infrared light and generates heat. Respective photothermal conversion materials of the three recording layers 920, 940, and 960 differ from one another in wavelength of the infrared light that they absorb.

The heat insulating layer 930 allows heat to be less likely to be transmitted between the recording layer 920 and the recording layer 940. The heat insulating layer 950 allows heat to be less likely to be transmitted between the recording layer 940 and the recording layer 960. The protective layer 970 protects the surface of the information recording layer 900. The heat insulating layers 930 and 950 and the protective layer 970 includes a transparent material.

The above-described configuration allows a variety of information to be visibly recorded in the moving body 1000. Specifically, in a case where information (character(s) or a graphic) is recorded on the information recording layer 900, the information recording layer 900 is irradiated with infrared light on the basis of a character pattern or graphic pattern of the information. A wavelength of this infrared light is set to a wavelength in accordance with a color of the character(s) or graphic that is desired to be recorded. In each of the recording layers 920, 940, and 960, the photothermal conversion material absorbs infrared light of a wavelength corresponding to the photothermal conversion material and generates heat. Then, the leuco dye is bound to the developer by the heat generated by the photothermal conversion material and goes into a colored state, or is separated from the developer and goes into a decolored state. In this way, a variety of information is visibly recorded in the moving body 1000. Furthermore, the information recording layer 900 serves to allow the visibly recorded information to be rewritten.

It is to be noted that in the advertisement consideration calculating system 1, the advertisement 1300 may be formed by performing a printing process to apply ink to a printing surface of the moving body 1000 that is not provided with the information recording layer 900.

The advertisement consideration calculating system 1 includes, for example, a data server unit 200, a printer unit 300, a web server unit 400, a terminal unit 500 that the advertiser 1100 uses, and a terminal unit 600 that driver 1200 uses. The data server unit 200, the printer unit 300, the web server unit 400, the terminal unit 500, and the terminal unit 600 are coupled to one another through a network 100. The network 100 is, for example, a network through which communication is performed using a communication protocol (TCP/IP) standardly used over the Internet. The network 100 may be, for example, a secure network through which communication is performed using a communication protocol unique to the network. The network 100 is, for example, the Internet, an intranet, or a local area network. The coupling of the data server unit 200, the printer unit 300, the web server unit 400, and the terminal unit 500 or the terminal unit 600 with the network 100 may be, for example, via a wired local area network (LAN), or may be via a wireless LAN such as Wi-Fi, a mobile phone line, or the like.

### (Data Server Unit 200)

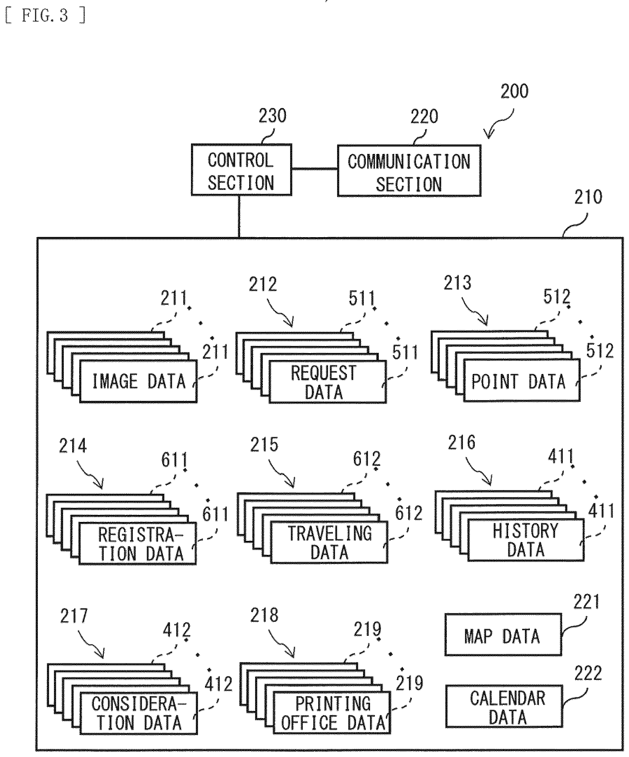

FIG. 3 illustrates a schematic configuration example of the data server unit 200. The data server unit 200 includes, for example, a storage section 210, a communication section 220, and a control section 230. The control section 230 processes information inputted from the outside through the communication section 220, and outputs information read out from the storage section 210 to the outside through the communication section 220. The communication section 220 performs communication with another device through the network 100.

The storage section 210 includes, for example, a nonvolatile memory, for example, such as an electrically erasable programmable read-only memory (EEPROM), a flash memory, or a resistive random access memory. For example, multiple pieces of image data 211 are stored in the storage section 210. The image data 211 is provided by the advertiser 1100 and is stored in the storage section 210. The image data 211 includes, for example, image data for the advertisement 1300 and a file name added to the image data for the advertisement 1300.

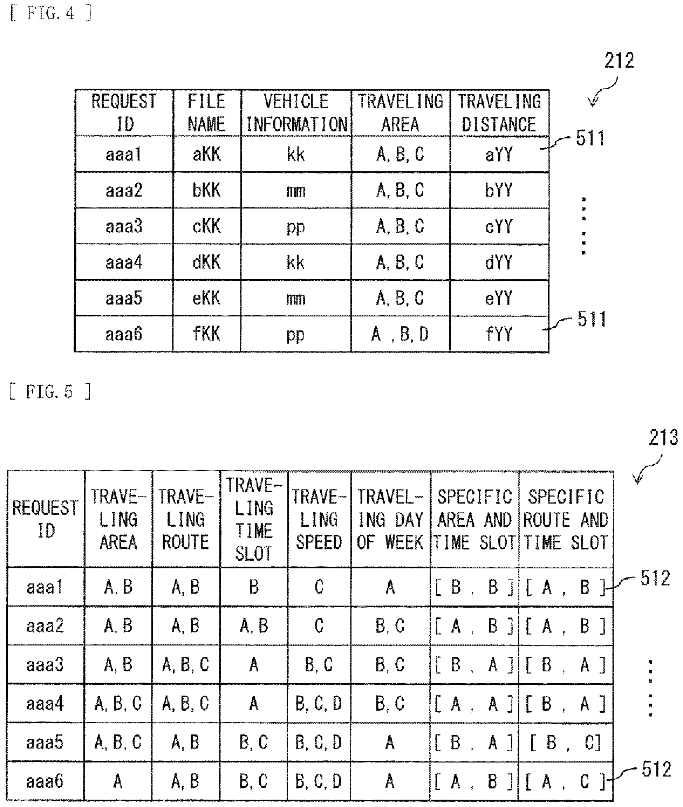

The storage section 210 further includes, for example, databases 212, 213, 214, 215, 216, 217, and 218 that are organized as illustrated in FIGs. 4 to 11 so as to makes it easy to search for and accumulate data.

FIG. 4 illustrates a configuration example of the database 212 regarding request data 511 (demand information). Multiple pieces of request data 511 are stored, for example, in the database 212. Therefore, the storage section 210 stores therein the multiple pieces of request data 511. The following description is based on the assumption that the database 212 has the configuration illustrated in FIG. 4. It is to be noted that the configuration of the database 212 is not limited to the configuration illustrated in FIG. 4.

Respective request data 511 include, for example, a request identification (ID) for the identification of the individual request data 511 from many advertisers 1100. The request data 511 include information on requirements for a moving body 1000 as an advertising medium. Therefore, the advertisement consideration calculating system 1 may handle acceptance of request data 511 from an advertiser 1100 as an advertisement posting request from the advertiser 1100. The request data 511 include, for example, a request ID, a file name, and vehicle information. The request data 511 include, for example, with respect to each request ID, a file name and vehicle information associated with the request ID. The request data 511 further include, for example, out of a traveling area and a traveling distance, at least the traveling area. The request data 511 include, for example, with respect to each request ID, a traveling area associated with the request ID. Furthermore, the request data 511 include, for example, with respect to each request ID, a traveling distance associated with the request ID.

The file name is a file name of image data 211. The vehicle information is information on a vehicle to be subject to advertisement posting. The vehicle information includes, for example, information on a manufacturer, a type of vehicle, a model year, a model number, a country, etc. The traveling area is information on an area where the vehicle to be subject to advertisement posting travels. The traveling distance is information on a traveling distance of the vehicle to be subject to advertisement posting.

FIG. 5 illustrates a configuration example of the database 213 regarding point data 512. Multiple pieces of point data 512 are stored, for example, in the database 212. Therefore, the storage section 210 stores therein the multiple pieces of point data 512. The following description is based on the assumption that the point data 512 has a configuration illustrated in FIG. 5. It is to be noted that the configuration of the point data 512 is not limited to the configuration illustrated in FIG. 5.

For example, a request identification (ID) for the identification of individual request data 511 from many advertisers 1100 is added to respective point data 512. The point data 512 include information on a special demand for advertisement posting from an advertiser 1100 and information on a special consideration (a bonus) for a moving body 1000 meeting the demand. Therefore, the advertisement consideration calculating system 1 may handle acceptance of point data 512 from the advertiser 1100 as a bonus offer from the advertiser 1100. The point data 512 include, for example, a traveling area, a traveling route, a traveling time slot, a traveling speed, a traveling day of week, a specific area and time slot, and a specific route and time slot.

The traveling area is, out of areas included in request data 511, especially, a desired area for a driver 1200 to travel. The traveling route is, out of the areas included in the request data 511, especially, a route that the advertiser 1100 desires the driver 1200 to travel. The traveling time slot is a time slot in which the advertiser 1100 desires the driver 1200 to travel. The traveling speed is a speed of the moving body 1000 at which the advertiser 1100 desires the driver 1200 to travel. The traveling day of week is a day of week on which the advertiser 1100 desires the driver 1200 to travel. The specific area and time slot is an area and time slot of an event scheduled to be held. The specific route and time slot is a route and time slot of the event scheduled to be held.

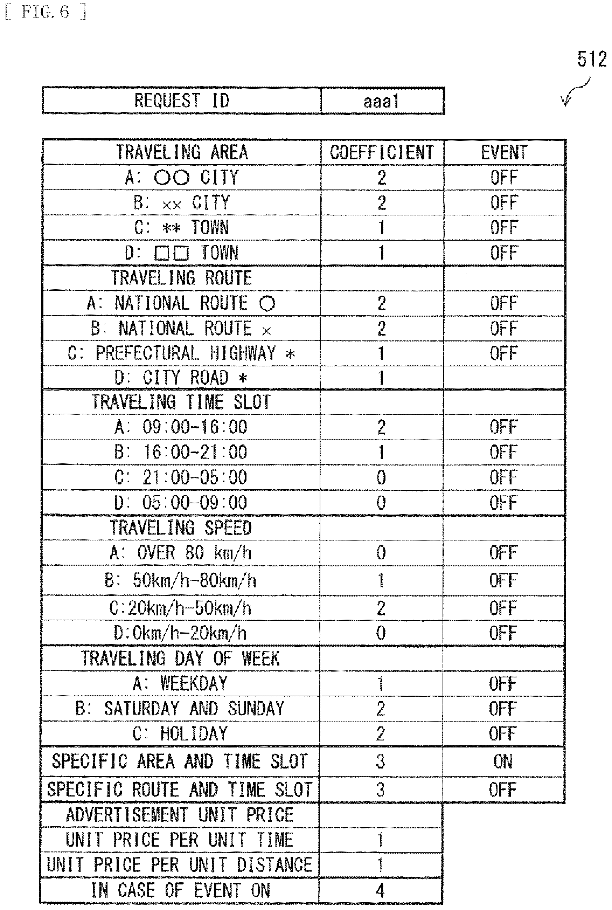

FIG. 6 illustrates a detailed configuration example of point data 512. The point data 512 includes, for example, a traveling area, a traveling route, a traveling time slot, a traveling speed, a traveling day of week, a specific area and time slot, and a specific route and time slot. The point data 512 may further include, for example, an advertisement unit price and In Case of Event ON. The term "In Case of Event ON" indicates when an event is scheduled. The event here means, for example, an event that the advertiser 1100 specifically hosts for a promotion of its own products.

The traveling area of the point data 512 itemizes information on areas, for example, A: ○○ City, B: ×× City, C: ** Town, and D: □□ Town. A coefficient with which the advertisement unit price is multiplied (hereinafter, referred to simply as "coefficient") is assigned to each of the areas included in the traveling area of the point data 512, for example. Furthermore, with respect to each area included in the traveling area of the point data 512, for example, Event ON or OFF has been selected. The term "Event ON" means there is an event scheduled. The term "Event OFF" means there is no event scheduled. The coefficient has an aspect of an incentive to a driver 1200. The coefficient prompts the driver 1200 to travel an area having a high coefficient.

The traveling route of the point data 512 itemizes information on roads, for example, A: National Route ○, B: National Route ×, C: Prefectural Highway *, and D: City Road *. A coefficient is assigned to each of the roads included in the traveling route of the point data 512, for example. Furthermore, with respect to each road included in the traveling route of the point data 512, for example, Event ON or OFF has been selected. The coefficient prompts the driver 1200 to travel a traveling route having a high coefficient.

The traveling time slot of the point data 512 itemizes information on time slots, for example, A: 9:00 to 16:00, B: 16:00 to 21:00, C: 21:00 to 05:00, and D: 05:00 to 09:00. A coefficient is assigned to each of the time slots included in the traveling time slot of the point data 512, for example. Furthermore, with respect to each time slot included in the traveling time slot of the point data 512, for example, Event ON or OFF has been selected. The coefficient prompts the driver 1200 to travel in a time slot having a high coefficient.

The traveling speed of the point data 512 itemizes information on speeds of the moving body 1000, for example, A: over 80 km/h, B: 50 km/h to 80 km/h, C: 20 km/h to 50 km/h, and D: 0 km/h to 20 km/h. A coefficient is assigned to each of the speeds included in the traveling speed of the point data 512, for example. Furthermore, with respect to each speed included in the traveling speed of the point data 512, for example, Event ON or OFF has been selected. The coefficient prompts the driver 1200 to travel at a speed having a high coefficient.

The traveling day of week of the point data 512 itemizes information on days of week on which the moving body 1000 travels, for example, A: weekday, B: Saturday and Sunday, and C: holiday. A coefficient is assigned to each of the days of week included in the traveling day of week of the point data 512, for example. Furthermore, with respect to each day of week included in the traveling day of week of the point data 512, for example, Event ON or OFF has been selected. The coefficient prompts the driver 1200 to travel on a day of week having a high coefficient.

A coefficient is assigned to the "specific area and time slot" of the point data 512, for example. Furthermore, in the "specific area and time slot" of the point data 512, for example, Event ON or OFF has been selected. The coefficient assigned to the "specific area and time slot" of the point data 512 is a higher value than, for example, the coefficient assigned to the traveling area of the point data 512. The coefficient having a higher value prompts the driver 1200 to travel in the "specific area and time slot".

A coefficient is assigned to the "specific route and time slot" of the point data 512, for example. Furthermore, in the "specific route and time slot" of the point data 512, for example, Event ON or OFF has been selected. The coefficient assigned to the "specific route and time slot" of the point data 512 is a higher value than, for example, the coefficient assigned to the traveling route of the point data 512. The coefficient having a higher value prompts the driver 1200 to travel in the "specific route and time slot".

The advertisement unit price of the point data 512 itemizes, for example, an advertisement unit price per unit time and an advertisement unit price per unit distance. A coefficient is assigned to the "Event ON" of the point data 512 in case of Event ON. That is, in the "In Case of Event ON", any coefficient with ON in the Event field is replaced with a coefficient in case of Event ON and becomes a higher value. The advertisement unit price of the point data 512 may be, for example, an amount of money, or may be loyalty point that is convertible into an amount of money.

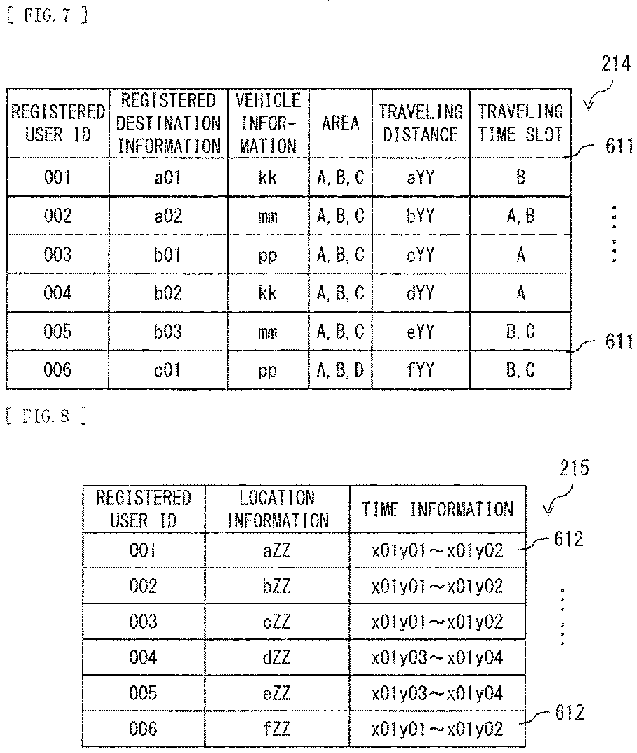

FIG. 7 illustrates a configuration example of the database 214 regarding registration data 611. Multiple pieces of registration data 611 are stored, for example, in the database 214. Therefore, the storage section 210 stores therein the multiple pieces of registration data 611. The following description is based on the assumption that the database 214 has a configuration illustrated in FIG. 7. It is to be noted that the configuration of the database 214 is not limited to the configuration illustrated in FIG. 7.

Respective registration data 611 include, for example, a registered user identification (ID) (registration identifying information) for the identification among many moving bodies 1000. The registration data 611 further include information on a corresponding moving body 1000 as an advertising medium. Therefore, the advertisement consideration calculating system 1 may handle acceptance of registration data 611 from a driver 1200 as an entry of an advertising medium. The registration data 611 include, for example, a registered user ID, registered destination information, vehicle information, residence information, a traveling distance, and a traveling time slot. The registration data 611 include, with respect to each registered user ID, registered destination information associated with the registered user ID.

The registered destination information is address information that is necessary when the web server unit 400 transmits data (for example, consideration data 411) to the terminal unit 600. Examples of the address information include an address or an e-mail address, etc. of the terminal unit 600. The vehicle information includes, for example, information on a manufacturer, a type of vehicle, a model year, a model number, a country, etc. of the moving body 1000. The residence information is, for example, information on an address of a parking lot to park the moving body 1000. The traveling distance is information on a traveling distance of the moving body 1000. The traveling time slot is information on a time slot in which the moving body 1000 usually travels.

FIG. 8 illustrates a configuration example of the database 215 regarding traveling data 612. Multiple pieces of traveling data 612 are stored, for example, in the database 215. Therefore, the storage section 210 stores therein the multiple pieces of traveling data 612. The following description is based on the assumption that the database 215 has a configuration illustrated in FIG. 8. It is to be noted that the configuration of the database 215 is not limited to the configuration illustrated in FIG. 8.

Respective traveling data 612 include, for example, a registered user ID for identification of the many moving bodies 1000. The traveling data 612 include information acquired by a GPS communication section 630 to be described later. The traveling data 612 include, for example, a registered user ID, location information and time information of the moving body 1000. The traveling data 612 include, for example, with respect to each registered user ID, location information and time information of the moving body 1000 associated with the registered user ID. The location information included in the traveling data 612 is, for example, information on the latitude and longitude. The time information included in the traveling data 612 is, for example, information including a date and time.

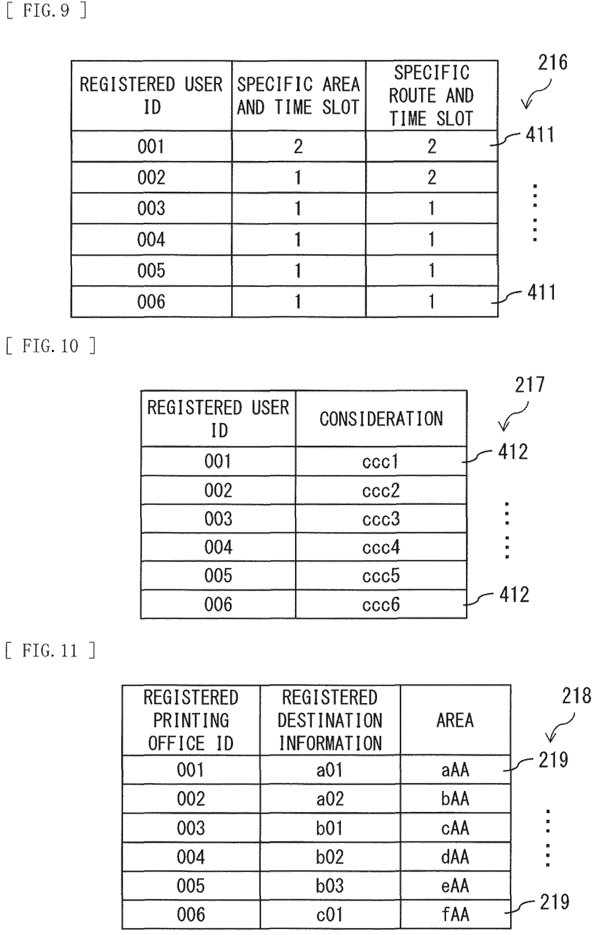

FIG. 9 illustrates a configuration example of the database 216 regarding history data 411. Multiple pieces of history data 411 are stored, for example, in the database 216. The following description is based on the assumption that the database 216 has a configuration illustrated in FIG. 9. It is to be noted that the configuration of the database 216 is not limited to the configuration illustrated in FIG. 9.

For example, a registered user ID for the identification of many moving bodies 1000 is added to respective history data 411. The history data 411 include the number of times the moving body 1000 has traveled in the "specific area and time slot" included in the point data 512 and the number of times the moving body 1000 has traveled in the "specific route and time slot" included in the point data 512.

FIG. 10 illustrates a configuration example of the database 217 regarding consideration data 412. Multiple pieces of consideration data 412 are stored, for example, in the database 217. Therefore, the storage section 210 stores therein the multiple pieces of consideration data 412. The following description is based on the assumption that the database 217 has a configuration illustrated in FIG. 10. It is to be noted that the configuration of the database 217 is not limited to the configuration illustrated in FIG. 10.

Respective consideration data 412 include, for example, a registered user ID for the identification of many moving bodies 1000. The consideration data 412 include information on a consideration for advertisement posting on the moving body 1000. The consideration data 412 include, as the information on a consideration for advertisement posting on the moving body 1000, for example, information on an amount of money or loyalty point having a monetary value. The consideration data 412 include, for example, with respect to each registered user ID, information on a consideration associated with the registered user ID.

FIG. 11 illustrates a configuration example of the database 218 regarding printing office data 219. Multiple pieces of printing office data 219 are stored, for example, in the database 218. Therefore, the storage section 210 stores therein the multiple pieces of printing office data 219. The following description is based on the assumption that the database 218 has a configuration illustrated in FIG. 11. It is to be noted that the configuration of the database 218 is not limited to the configuration illustrated in FIG. 11.

Respective printing office data 219 include printing office information on a printing office that is able to perform printing based on image data 211 for an advertisement or print data 340A obtained by converting the image data 211. The printing office data 219 include, as the printing office information, for example, a registered printing office ID for the identification of many printing offices. The printing office data 219 further include, as the printing office information, for example, registered destination information and an area. The registered destination information included in the printing office data 219 is, for example, an address of the printer unit 300 that is necessary when the web server unit 400 transmits data (the image data 211 or the print data 340A) to the printer unit 300. The area included in the printing office data 219 is, for example, information on an address of the printing office. The printing office data 219 include, for example, with respect to each printing office ID, registered destination information associated with the printing office ID. Examples of the printing office include a printing company, a sheet metal plant, an auto-repair shop, a gas station, etc.

As illustrated in FIG. 3, the storage section 210 further includes, for example, map data 221 and calendar data 222 as necessary. The map data 221 is data in which information on the latitude and longitude is associated with an address. The calendar data 222 is data in which a date and time is associated with a day of week.

### (Printer Unit 300)

The printer unit 300 performs a printing process on the basis of a signal inputted from the web server unit 400. The printer unit 300 performs the printing process, for example, on a moving body 1000 including the information recording layer 900. The printer unit 300 may perform, for example, a printing process to apply ink to a printing surface of a moving body 1000 that is not provided with the information recording layer 900. The printer unit 300 corresponds to a specific example of a "storage section" and a "storage unit" in the present disclosure.

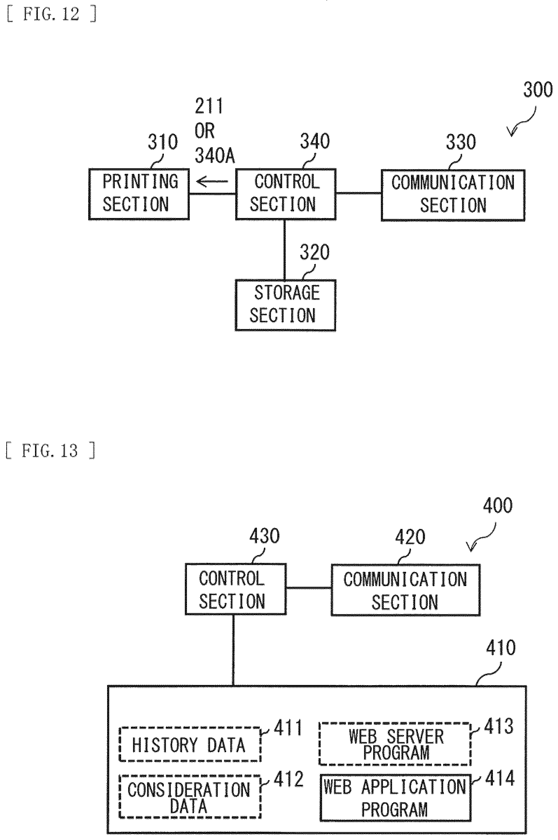

FIG. 12 illustrates a schematic configuration example of the printer unit 300. The printer unit 300 includes, for example, a printing section 310, a storage section 320, a communication section 330, and a control section 340. The control section 340 includes a processor. The control section 340 outputs, for example, data (image data 211 or print data 340A) inputted from the outside through the communication section 330 to the printing section 310. Furthermore, the control section 340 stores, for example, the data (the image data 211 or the print data 340A) inputted from the outside through the communication section 330 in the storage section 320. The communication section 330 performs communication with another device through the network 100. The printing section 310 perform a printing process, for example, on the basis of the data (the image data 211 or the print data 340A) inputted from the control section 340. The printing process performed by the printing section 310 includes, for example, a process of irradiating the information recording layer 900 including leuco dye with laser light and a process of applying ink to a printing surface. The print data has a data format suitable for printing on the information recording layer 900 including leuco dye. It is to be noted that in a case where data inputted to the printing section 310 is image data 211, the control section 340 converts, for example, the image data 211 into print data 340A and outputs the print data 340A to the printing section 310.

### (Web Server Unit 400)

FIG. 13 illustrates a schematic configuration example of the web server unit 400. The web server unit 400 provides a user interface of the terminal units 500 and 600. Furthermore, the web server unit 400 performs a calculation using received traveling data 612. Specifically, the web server unit 400 receives traveling data 612 of a moving body 1000, and determines a consideration for advertisement posting on the moving body 1000 on the basis of the received traveling data 612. The web server unit 400 includes, for example, a storage section 410, a communication section 420, and a control section 430. The web server unit 400 corresponds to a specific example of a "receiving section in an advertisement consideration calculating system", a "determining section", a "transmitting section in the advertisement consideration calculating system", and an "external device" in the present disclosure.

The communication section 420 performs communication with other units (the data server unit 200, etc.) in the advertisement consideration calculating system 1 through the network 100. The storage section 410 includes, for example, a nonvolatile memory, for example, such as an EEPROM, a flash memory, or a resistive random access memory. The storage section 410 has stored therein programs (for example, a web server program 413 and a web application program 414) executed by the control section 430, etc. The web application program 414 is an application program used through the network 100. The web application program 414 is caused to run by the web server program 413 and a later-described web browser program 513 or a later-described web browser program 613 cooperating with each other. The control section 430 includes a processor, and executes, for example, the web server program 413, the web application program 414, etc. stored in the storage section 410. The function of the control section 430 is realized, for example, by the control section 430 executing the web server program 413 and the web application program 414. For example, history data 411 and consideration data 412 are stored in the storage section 410. The history data 411 and the consideration data 412 are derived by the control section 430 executing the web server program 412 and the web application program 413.

Specifically, the control section 430 receives registration data 611 of a moving body 1000 for registration as an advertising medium through the terminal unit 600 and the communication section 420. The registration data 611 is information inputted to the terminal unit 600 by a driver 1200. The control section 430 stores the received registration data 611 in the database 213 of the storage section 210 through the communication section 420.

The control section 430 accepts request data 511 and point data 512 through the terminal unit 500 and the communication section 420. The request data 511 and the point data 512 are information inputted to the terminal unit 500 by an advertiser 1100. When having accepted the request data 511 and the point data 512, the control section 430 stores the request data 511 and the point data 512 in the database 212 of the storage section 210 through the communication section 420.

Furthermore, when having accepted the request data 511, the control section 430 determines whether or not there is registration data 611 that matches the request data 511 in the database 212 of the storage section 210. As a result, in a case where there is the matching registration data 611, the control section 430 transmits an advertisement posting request on the basis of registered destination information included in the matching registration data 611. The control section 430 accepts a printing request which means consent of the advertisement posting request through the terminal unit 600 and the communication section 420. When having accepted the printing request which means consent of the advertisement posting request, the control section 430 reads out image data 211 corresponding to a file name included in the request data 511 from the storage section 210. The control section 430 converts the read image data 211 into print data 340A, and outputs the print data 340A obtained through the conversion to the printer unit 300 through the communication section 420. The print data 340A is data written in a script that the printer unit 300 is able to understand. The print data 340A has a data format suitable for printing on the information recording layer 900 illustrated in FIG. 2. It is to be noted that the print data 340A is not limited to the data format suitable for printing on the information recording layer 900 illustrated in FIG. 2. In a case where the printer unit 300 has a function of converting data inputted from the outside into print data, the control section 430 may output the read image data 211 to the printer unit 300 without converting the image data 211 into print data 340A.

The control section 430 accepts traveling data 612 through the terminal unit 600 and the communication section 420. The traveling data 612 includes location information and time information of the moving body 1000. When having accepted the traveling data 612, the control section 430 stores the traveling data 612 in the database 214 of the storage section 210 through the communication section 220. Furthermore, when having accepted the traveling data 612, the control section 430 determines a consideration (consideration data 412) for advertisement posting on the moving body 1000. The control section 430 transmits, for example, information (consideration data 412) on the determined consideration to the terminal unit 600 and the data server unit 200 through the communication section 420. The control section 430 determines, for example, whether or not there is a registered user ID that matches a registered user ID included in the traveling data 612 in the database 214 of the storage section 210. As a result, in a case where there is a registered user ID that matches the registered user ID included in the traveling data 612 in the database 214 of the storage section 210, the control section 430 determines a consideration (consideration data 412) for advertisement posting on the moving body 1000 on the basis of the traveling data 612. Furthermore, the control section 430 reads out registered destination information corresponding to the registered user ID included in the traveling data 612 from the database 214 of the storage section 210, and transmits information (consideration data 412) on the determined consideration on the basis of the read registered destination information.

The control section 430 first determines, for example, whether or not there is request data 511 that matches the location information and time information that are included in the traveling data 612 in the database 212 of the storage section 210. As a result, in a case where there is matching request data 511, the control section 430 determines a consideration (consideration data 412) on the basis of an advertisement unit price and a coefficient that are included in point data 512 corresponding to a request ID of the matching request data 511 and the location information (location information a) and the time information (time information b) that are included in the traveling data 612.

At this time, for example, in a case where the location information and time information included in the traveling data 612 fall under any privilege content included in the foregoing point data 512, the control section 430 increases the consideration (the consideration data 412), as compared with a case where the location information and time information included in the traveling data 612 do not fall under the foregoing privilege content. The privilege content included in the point data 512 means, for example, content corresponding to an item with a coefficient of 2 or greater.

For example, using the map data 221, the control section 430 converts location information included in each traveling data 612 into information on the latitude and longitude. For example, using the calendar data 222, the control section 430 converts time information included in each traveling data 612 into information including the year and a date and time. For example, the control section 430 determines whether or not the obtained information on the latitude and longitude and the obtained information including the year and a date and time fall under the foregoing privilege content. As a result, in a case where the information on the latitude and longitude and the information including the year and a date and time fall under the foregoing privilege content, the control section 430 determines a consideration (consideration data 412) using, for example, an advertisement unit price higher than usual.

The control section 430 selects, for example, out of a coefficient (coefficient c) of a traveling area corresponding to the location information a and a coefficient (coefficient d) of a traveling time slot corresponding to the time information b, the coefficient having a greater numerical value (for example, the coefficient c). Further, the control section 430 calculates a traveling distance (traveling distance e) of the moving body 1000 on the basis of, for example, the location information included in the traveling data 612. Further, the control section 430 calculates a traveling time (traveling time f) of the moving body 1000 on the basis of, for example, the time information included in the traveling data 612. Further, the control section 430 selects, for example, out of a value (value g) obtained by dividing the calculated traveling distance e by a unit distance and a value (value h) obtained by dividing the calculated traveling time f by a unit time, the value having a greater numerical value (for example, the value h). Further, the control section 430 derives consideration data 412, for example, by multiplying the selected value (for example, the value h) by an advertisement unit price (for example, a unit price per unit time) corresponding to the selected value (for example, the value h).

### (Terminal Unit 500)

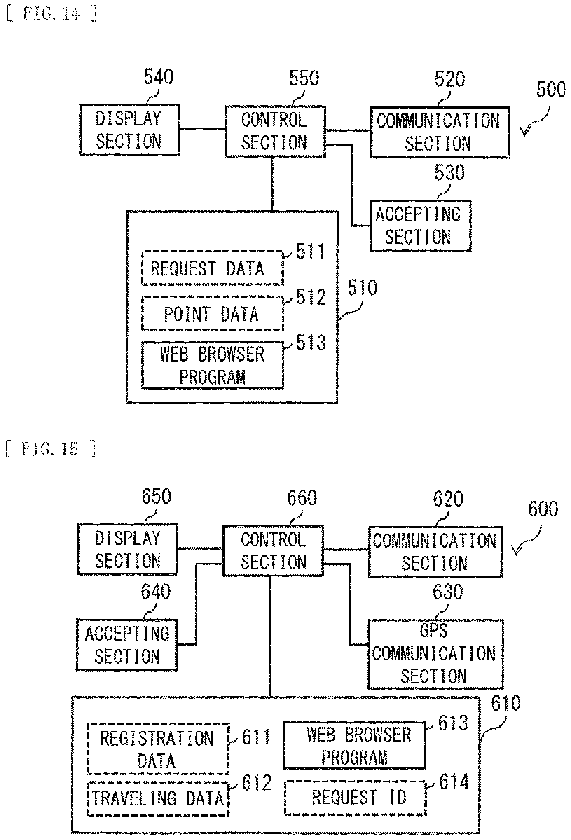

FIG. 14 illustrates a schematic configuration example of the terminal unit 500.

The terminal unit 500 includes, for example, a storage section 510, a communication section 520, an accepting section 530, a display section 540, and a control section 550. The display section 540 includes, for example, a liquid crystal panel, an organic EL panel, or the like. The accepting section 530 is a user interface of the terminal unit 500, and, for example, is a graphical user interface (GUI) displayed on a display surface of the display section 540. The storage section 510 has stored therein programs executed by the control section 550 (for example, a web browser program 512 and an operating system), etc. For example, request data 511 and point data 512 are stored in the storage section 510.

The control section 550 includes a processor, and executes the web browser program 512, the operating system, etc. stored in the storage section 510. The communication section 520 performs communication with other units (the web server unit 400, etc.) in the advertisement consideration calculating system 1 through the network 100. The user interface (the accepting section 530) of the terminal unit 500 is realized, for example, by causing an application (for example, html data) acquired from the web server unit 400 to be processed by the web browser program 512.

The control section 550 accepts an input of request data 511 and point data 512 from an advertiser 1100. The control section 550 transmits the accepted request data 511 and point data 512 to the web server unit 400 through the communication section 520.

### (Terminal Unit 600)

FIG. 15 illustrates a schematic configuration example of the terminal unit 600. The terminal unit 600 corresponds to a specific example of a "terminal unit" in the present disclosure.

The terminal unit 600 includes, for example, a storage section 610, a communication section 620, the GPS communication section 630, an accepting section 640, a display section 650, and a control section 660. The control section 660 corresponds to a specific example of a "transmitting section in a terminal unit" and a "receiving section in a terminal unit" in the present disclosure. The display section 650 includes, for example, a liquid crystal panel, an organic EL panel, or the like. The accepting section 640 is a user interface of the terminal unit 600, and, for example, is a graphical user interface (GUI) displayed on a display surface of the display section 650. The accepting section 640 accepts, for example, registration data 611 of a moving body 1000 for registration as an advertising medium from a driver 1200. The GPS communication section 630 derives location information and time information on the basis of information received from a satellite, and outputs the location information and the time information to the control section 660. The storage section 610 has stored therein programs executed by the control section 660 (for example, the web browser program 613 and an operating system), etc. For example, registration data 611 and traveling data 612 are stored in the storage section 610. For example, request ID 614 is stored in the storage section 610. The request ID 614 will be described in detail later.

The control section 660 includes a processor, and executes the web browser program 613, the operating system, etc. stored in the storage section 610. The communication section 620 performs communication with other units (the web server unit 400, etc.) in the advertisement consideration calculating system 1 through the network 100. The user interface (the accepting section 630) of the terminal unit 600 is realized, for example, by causing an application (for example, html data) acquired from the web server unit 400 to be processed by the web browser program 613.

The control section 660 accepts the input of the registration data 611 of the moving body 1000 for registration as an advertising medium from the driver 1200 through the accepting section 640. The control section 660 transmits the accepted registration data 611 to the web server unit 400. The control section 660 transmits the accepted registration data 611 to the storage section 210 of the data server unit 200 through the web server unit 400.

The control section 660 accepts, through the accepting section 640, an input of point data 512 with a request ID that matches a request ID of request data 511 coinciding with the registration data 611 from the web server unit 400. In the following, the point data 512 with the request ID that matches the request ID of the request data 511 coinciding with the registration data 611 is referred to as the specific point data 512. The control section 660 receives, as demand information, for example, out of a traveling area, a traveling route, a traveling time slot, a traveling speed, and a traveling day of week included in the specific point data 512, at least one piece of information from the web server unit 400. The control section 660 may generate, for example, an image signal for presenting (displaying) the received demand information and output the image signal to the display section 650. The display section 650 is able to present (display) the demand information on the basis of the image signal inputted from the control section 660. This enables the control section 660 to inform the driver 1200 of the demand of the advertiser 1100 (i.e., a condition with a high consideration).

The control section 660 generates traveling data 612 using data acquired from the GPS communication section 630. The control section 660 transmits the generated traveling data 612 to the web server unit 400 through the communication section 620. The control section 660 receives consideration data 411 from the web server unit 400 through the communication section 620. The control section 660 may generate an image signal for presenting (displaying) the received consideration data 411 and output the image signal to the display section 650. The display section 650 is able to present (display) the consideration data 411 on the basis of the image signal inputted from the control section 660. This enables the control section 660 to inform the driver 1200 of acquisition of a consideration.

The control section 660 receives an advertisement posting request from the web server unit 400 through the communication section 620. The control section 660 may generate an image signal for presenting (displaying) the received advertisement posting request and output the image signal to the display section 650. The display section 650 is able to present (display) the advertisement posting request on the basis of the image signal inputted from the control section 660. This enables the control section 660 to inform the driver 1200 that the advertisement posting request has been received. The control section 660 accepts an input of a printing request which means consent of the advertisement posting request from the driver 1200. The control section 660 transmits the printing request which means consent of the advertisement posting request to the web server unit 400 through the communication section 620.

### [Processing Procedure]

Subsequently, the processing procedure of the advertisement consideration calculating system 1 is described.

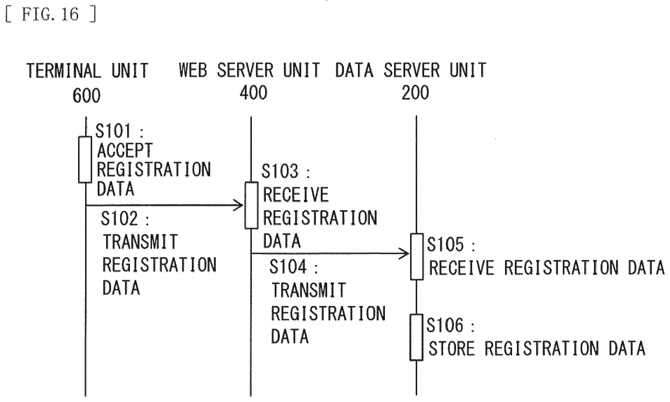

FIG. 16 illustrates an example of the processing procedure at the time of entry of registration data in the advertisement consideration calculating system 1. First, the terminal unit 600 accepts an input of registration data 611 from a driver 1200 (step S101). Next, the terminal unit 600 transmits the accepted registration data 611 to the web server unit 400 (step S102). Then, the web server unit 400 receives the registration data 611 from the terminal unit 600 (step S103). Then, the web server unit 400 transmits the received registration data 611 to the data server unit 200 (step S104). The data server unit 200 receives the registration data 611 from the web server unit 400 (step S105). And then, the data server unit 200 stores the received registration data 611 in the storage section 210 (step S106).

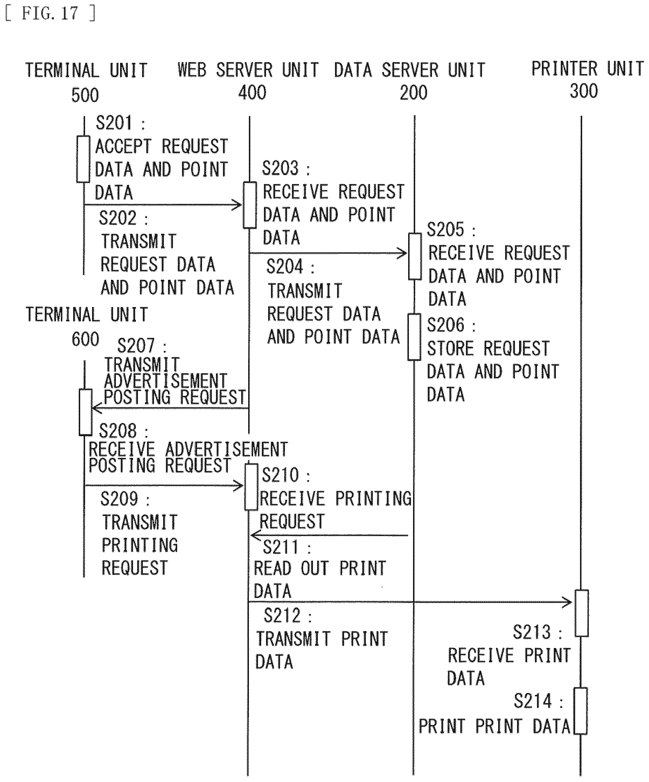

FIG. 17 illustrates an example of the processing procedure at the time of entry of request data and point data in the advertisement consideration calculating system 1. The terminal unit 600 accepts an input of request data 511 and point data 512 from an advertiser 1100 (step S201). The terminal unit 600 transmits the accepted request data 511 and point data 512 to the web server unit 400 (step S202). The web server unit 400 receives the request data 511 and the point data 512 from the terminal unit 600 (step S203). The web server unit 400 transmits the received request data 511 and point data 512 to the data server unit 200 (step S204). The data server unit 200 receives the request data 511 and the point data 512 from the web server unit 400 (step S205). The data server unit 200 stores the received request data 511 and point data 512 in the storage section 210 (step S206).

When having accepted the request data 511, the web server unit 400 further determines whether or not there is registration data 611 that matches the request data 511 in the database 212 of the storage section 210. As a result, in a case where there is matching registration data 611, the web server unit 400 transmits an advertisement posting request on the basis of registered destination information included in the matching registration data 611 (step S207). The advertisement posting request includes a request ID. The web server unit 400 transmits the advertisement posting request to the terminal unit 600, for example, on the basis of address information included in the registered destination information included in the matching registration data 611. The terminal unit 600 receives the advertisement posting request from the web server unit 400 (step S208). The terminal unit 600 stores, as request ID 614, the request ID included in the advertisement posting request in the storage section 610 (see FIG. 16). The terminal unit 600 converts information on the received advertisement posting request into an image signal, and outputs the image signal to the display section 650. The display section 650 receives the image signal, thereby displaying the advertisement posting request.

The terminal unit 600 accepts an input of a printing request from the advertiser 1100. The printing request means consent of the advertisement posting request. Then, the terminal unit 600 transmits the accepted printing request to the web server unit 400 (step S209). The web server unit 400 receives the printing request from the terminal unit 600 (step S210). When having accepted the printing request, the web server unit 400 selects printing office data 219 of the nearest printing office to an area included in the matching registration data 611 from the database 218 of the storage section 210. Furthermore, when having accepted the printing request, the web server unit 400 reads out, from the storage section 210, image data 211 corresponding to a file name included in the request data 511 (step S211). The web server unit 400 converts the read image data 211 into print data 340A. The web server unit 400 transmits the print data 340A obtained through the conversion to the printer unit 300 on the basis of registered destination information that is included in the printing office data 219 and selected from the database 218 of the storage section 210 (step S212). In a case where the printer unit 300 has a function of converting data inputted from the outside into print data, the web server unit 400 may output the read image data 211 to the printer unit 300 without converting the image data 211 into print data 340A. The printer unit 300 receives the image data 211 or the print data 340A from the web server unit 400 (step S213). The printer unit 300 performs a printing process on the basis of the data inputted from the web server unit 400 (step S214). The printing process performed by the printing section 310 includes, for example, a process of irradiating the information recording layer 900 including leuco dye with laser light and a process of applying ink to a printing surface. It is to be noted that, in a case where data inputted to the printer unit 300 has not been converted into print data, the printer unit 300 converts, for example, the image data 211 inputted from the web server unit 400 into print data 340A, and performs a printing process on the basis of the print data 340A obtained through the conversion .

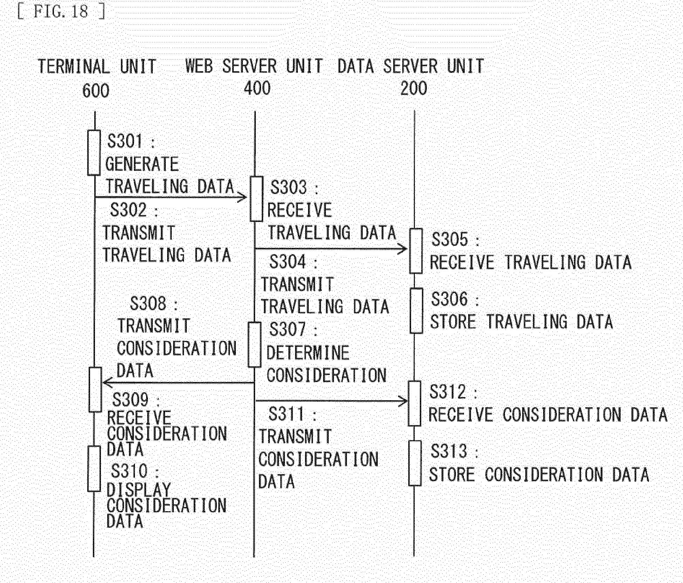

FIG. 18 illustrates an example of the processing procedure at the time of determination of a consideration in the advertisement consideration calculating system 1. The terminal unit 600 generates traveling data 612 using location information and time information of a moving body 1000 that the GPS communication section 630 has obtained (step S301). The terminal unit 600 transmits the generated traveling data 612 to the web server unit 400 (step S302). The web server unit 400 receives the traveling data 612 from the terminal unit 600 (step S303). The web server unit 400 transmits the received traveling data 612 to the data server unit 200 (step S304). The data server unit 200 receives the traveling data 612 from the web server unit 400 (step S305). The data server unit 200 stores the received traveling data 612 in the storage section 210 (step S306).

The web server unit 400 determines a consideration (consideration data 412) for advertisement posting on the moving body 1000 on the basis of the received traveling data 612 (step S307). The web server unit 400 transmits the determined consideration data 412 to the terminal unit 600 (step S308). The terminal unit 600 receives the consideration data 412 from the web server unit 400 (step S309). The terminal unit 600 generates an image signal for presenting (displaying) the received consideration data 412, and presents (displays) the consideration data 411 on the basis of the generated image signal (step S310).

The web server unit 400 further transmits the determined consideration data 412 to the data server unit 200 (step S311). The data server unit 200 receives the consideration data 412 from the web server unit 400 (step S312). The data server unit 200 stores the received consideration data 412 in the storage section 210 (step S313).

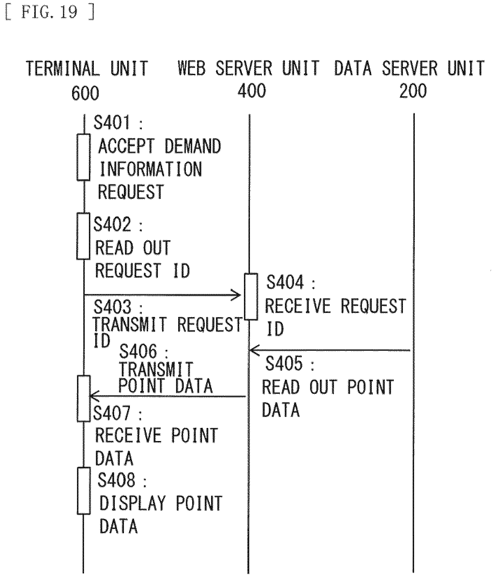

FIG. 19 illustrates an example of the processing procedure when demand information is displayed in the advertisement consideration calculating system 1. The terminal unit 600 accepts an input of a demand information request from the driver 1200 (step S401). The demand information request means a request for information that the advertiser 1100 demands of the driver 1200 (i.e., a condition with a high consideration). When having accepted the demand information request, the terminal unit 600 reads out a request ID 614 from the storage section 610 (step S402). The terminal unit 600 transmits the read request ID 614 to the web server unit 400 (step S403). The web server unit 400 receives the request ID 614 from the terminal unit 600 (step S404). The web server unit 400 reads out, from the database 213 of the storage section 210, point data 512 including a request ID that matches the received request ID 614 (step S405). The web server unit 400 transmits the read point data 512 to the terminal unit 600 (step S406). The terminal unit 600 receives the point data 512 from the web server unit 400 (step S407). The terminal unit 600 generates an image signal for presenting (displaying) the received point data 512, and outputs the image signal to the display section 650. The display section 650 presents (displays) the consideration data 411 on the basis of the image signal inputted from the control section 660 (step S408). This enables the control section 660 to inform the driver 1200 of demand information (i.e., a condition with a high consideration).

### [Effects]

Subsequently, the effects of the advertisement consideration calculating system 1 according to the present embodiment are described.

Advertisements are provided in various public places. Recently, there are many cases where an advertisement is posted in a place that is not usually used as an advertising space. There are many cases of posting advertisements, for example, on a side face of a cargo bed of a large van body truck, the side faces of a bus and a taxi, etc.

Incidentally, a moving body, such as those described above, does not always travel a place suitable for advertising or travel in a time slot suitable for advertising. Thus, it is not easy to realize cost-effectiveness as compared with a case where an advertisement is posted in a fixed place.

On the other hand, in the advertisement consideration calculating system 1 according to the present embodiment, a consideration for advertisement posting on the moving body 1000 is determined on the basis of the traveling data 612 of the moving body 1000. This makes it possible for the advertiser 1100 to pay a consideration in accordance with the value of advertising in a traveling place and a time slot of the moving body 1000 with the advertisement 1300 posted thereon as the whole or part of an advertisement posting fee. Consequently, it is possible to easily realize the cost-effectiveness of advertisement posting on the moving body 1000.

Furthermore, in the advertisement consideration calculating system 1 according to the present embodiment, in a case where there is a registered user ID that matches a registered user ID received by the web server unit 400 in the database 214, a consideration (consideration data 412) is determined. Accordingly, calculation of the consideration (consideration data 412) is confined to the moving bodies 1000 currently registered in the database 214, and therefore it is possible to reduce the load on the web server unit 400 due to calculation of the consideration (the consideration data 412). As a result, it is possible to reduce the cost of the web server unit 400, and thus, it is also possible to reduce a usage fee of this advertisement consideration calculating system 1. Consequently, it is possible to easily realize the cost-effectiveness of advertisement posting on the moving body 1000.

Moreover, in the advertisement consideration calculating system 1 according to the present embodiment, information on the consideration (the consideration data 412) determined by the web server unit 400 is transmitted to the terminal unit 600. This makes it possible for the driver 1200 to promptly check the consideration (the consideration data 412) for driving the moving body 1000 with the advertisement 1300 on the display section 650, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Furthermore, in the advertisement consideration calculating system 1 according to the present embodiment, information on the consideration (the consideration data 412) is transmitted on the basis of registered destination information. This makes it possible for the driver 1200 to promptly check the consideration (the consideration data 412) for driving the moving body 1000 with the advertisement 1300 on the display section 650, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Moreover, in the advertisement consideration calculating system 1 according to the present embodiment, in a case where location information and time information included in the traveling data 612 fall under any privilege condition, the consideration (the consideration data 412) is increased as compared with a case where the location information and time information included in the traveling data 612 do not fall under the foregoing privilege condition. This makes it possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Furthermore, in the advertisement consideration calculating system 1 according to the present embodiment, identification information and destination information of the moving body 1000 for registration as an advertising medium are stored, as registration data 611 of the moving body 1000, in the database 214 of the storage section 210. This makes it possible to manage the consideration (consideration data 412) with respect to each moving body 1000 and also to inform the driver 1200 of the consideration (the consideration data 412). Accordingly, it becomes possible for the driver 1200 to promptly check the consideration (the consideration data 412) for driving the moving body 1000 with the advertisement 1300 on the display section 650, and thus, it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Moreover, in the advertisement consideration calculating system 1 according to the present embodiment, the point data 512 is transmitted on the basis of the registered destination information. This makes it possible for the driver 1200 to promptly check the consideration (the consideration data 412) for driving the moving body 1000 with the advertisement 1300 on the display section 650, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Furthermore, in the advertisement consideration calculating system 1 according to the present embodiment, the printing office suitable for performing printing based on the image data 211 or the print data 340A is determined on the basis of the registration data 611 and printing office data 219. Then, the image data 211 or the print data 340A is transmitted on the basis of registered destination information of the determined printing office. This makes it possible to minimize the trouble of having to cause the driver 1200 to bring the moving body 1000 to the printing office and communicate with the printing office to perform the printing on the moving body 1000. As a result, it is possible to reduce the printing cost, and thus, it is also possible to reduce a usage fee of this advertisement consideration calculating system 1. Consequently, it is possible to easily realize the cost-effectiveness of advertisement posting on the moving body 1000.

Moreover, in the advertisement consideration calculating system 1 according to the present embodiment, the print data 430A has a data format suitable for printing on the information recording layer 900 including leuco dye. Accordingly, by directly applying ink to the body of the moving body 1000, it becomes possible to reduce the printing cost considerably as compared with a case of forming the advertisement 1300. Therefore, it is possible to easily realize the cost-effectiveness of advertisement posting on the moving body 1000.

Furthermore, in the advertisement consideration calculating system 1 according to the present embodiment, if the traveling data 612 of the moving body 1000 is transmitted to the web server unit 400, information on the consideration for advertisement posting on the moving body 1000 determined on the basis of the traveling data 612 is obtained from the web server unit 400. This makes it possible for the advertiser 1100 to pay the driver 1200 of the moving body 1000 the consideration in accordance with the value of advertising in the traveling place and the time slot of the moving body 1000 with the advertisement 1300 posted thereon as the whole or part of an advertisement posting fee. Consequently, it is possible to easily realize the cost-effectiveness of advertisement posting on the moving body 1000.

Moreover, in the advertisement consideration calculating system 1 according to the present embodiment, the registration data 611 of the moving body 1000 is accepted, and the accepted registration data 611 is transmitted to the storage section 210 of the data server unit 200. As above, in the present embodiment, driver registration is able to be made in a simple way; therefore, it is possible to prompt many drivers 1200 to register. As a result, it is possible to reduce the expense involved in the driver registration. Consequently, it is possible to easily realize the cost-effectiveness of advertisement posting on the moving body 1000.

Furthermore, in the advertisement consideration calculating system 1 according to the present embodiment, it is possible to display information on the consideration on the display section 650 of the terminal unit 600. This makes it possible to bring the driver 1200 a realization that driving the moving body 1000 earns him/her a consideration, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Moreover, in the advertisement consideration calculating system 1 according to the present embodiment, the terminal unit 600 receives, out of a traveling area, a traveling route, a traveling time slot, a traveling speed, and a traveling day of week, at least one piece of information as demand information. This makes it possible to inform the driver 1200 of a condition with a high consideration, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

Furthermore, in the advertisement consideration calculating system 1 according to the present embodiment, the demand information received by the terminal unit 600 is displayed on the display section 650. This makes it possible to bring the driver 1200 the realization that driving the moving body 1000 earns him/her the consideration, thus it is possible to maintain and enhance motivation for the driver 1200 to drive the moving body 1000 with the advertisement 1300. As a result, the chance that the advertisement 1300 provided on the moving body 1000 catches consumers' eyes is increased. Therefore, it is possible to easily realize the cost-effectiveness of advertisement posting on the moving body 1000.

### <Modification Examples>

### [Modification Example A]

In the foregoing embodiment, an advertisement 1300 is printed on the basis of the request from an advertiser 1100. However, in the foregoing embodiment, the advertisement 1300 may be printed on the basis of an advertisement printing request from the driver 1200. In that case, however, in view of the cost-effectiveness, it is preferable that there be some limitations, such as a limitation that the advertisement 1300 is printed only in a case where the registration data 611 of the moving body 1000 of the driver 1200 who has issued the advertisement printing request coincides with the request data 511 of the advertiser 1100.

For example, it is assumed, as illustrated in FIG. 19, that the terminal unit 600 accepts the input of the advertisement printing request from the driver 1200 (step S501). Then, the terminal unit 600 transmits the accepted advertisement printing request to the web server unit 400 (step S502). The advertisement printing request includes, for example, a registered user ID. The web server unit 400 receives the advertisement printing request from the terminal unit 500 (step S503). Then, the web server unit 400 determines whether or not the registration data 611 corresponding to the registered user ID included in the advertisement printing request coincides with the request data 511 of the advertiser 1100 (step S504). In a case where the registration data 611 is determined to coincide with the request data 511, the web server unit 400 transmits a receipt of the request to the terminal unit 500 (step S505). The terminal unit 500 receives the receipt of the request from the web server unit 400 (step S506). In a case where the registration data 611 is determined to coincide with the request data 511, further, the web server unit 400 reads out the print data 211 corresponding to the coinciding request data 511 from the data server unit 200 (step S507), and transmits the print data 211 to the printer unit 300 (step S508). The printer unit 300 receives the print data 211 from the web server unit 400 (step S509). The printer unit 300 prints the received print data 211 on the corresponding moving body 1000 (step S510).

In this way, even in a case where printing is performed upon request from the driver 1200, a similar effect to the foregoing embodiment is obtained.

Furthermore, in the foregoing embodiment, in a case where an advertisement is printed on the basis of an advertisement printing request from the driver 1200 who has registered the moving body 1000 in the advertisement consideration calculating system 1, some expense (for example, a printing fee, a design fee, etc.) may be imposed on the driver 1200.

### [Modification Example B]

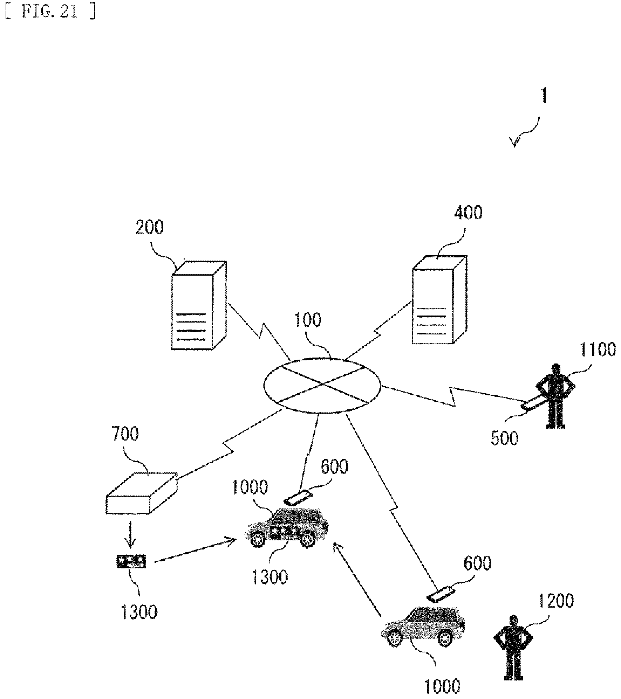

In the foregoing embodiment, the advertisement 1300 is printed on the information recording layer 900 provided on the moving body 1000. However, for example, as illustrated in FIG. 21, the advertisement 1300 is printed on a resin seal. In that case, however, the advertisement consideration calculating system 1 includes a printer unit 700 capable of printing on a resin seal, instead of the printer unit 300. Furthermore, the resin seal with the advertisement 1300 is pasted on the moving body 1000. Even in this case, a similar effect to the foregoing embodiment is obtained.

Preferably, the advertisement consideration calculating system 1 is provided with a mechanism that makes it possible to check if the resin seal with the advertisement 1300 has been pasted on the moving body 1000. For example, when the driver 1200 logs in to the advertisement consideration calculating system 1 through the terminal unit 600, the terminal unit 600 may request the driver 1200 to take a photo of the advertisement 1300 pasted on the moving body 1000. The terminal unit 600 transmits image data obtained through the photographing to the web server unit 400. The web server unit 400 compares the image data transmitted from the terminal unit 600 with image data 211 stored in the storage section 210, and, in a case where it matches any image data 211, transmits a permission of log-in to the terminal unit 600. When having received the permission of log-in from the web server unit 400, the terminal unit 600 permits the driver 1200 to log in to the advertisement consideration calculating system 1. The advertisement consideration calculating system 1 is provided with such a mechanism, thus it is possible to prevent the driver 1200 from forgetting the pasting of the resin seal of the advertisement 1300 on the moving body 1000. As a result, it is possible to prevent the generation of a consideration when the moving body 1000 has been driven without pasting the resin seal with the advertisement 1300 thereon. Furthermore, the chance that the advertisement 1300 provided on the moving body 1000 catches consumers' eyes is increased. Therefore, it is possible to easily realize the cost-effectiveness of advertisement posting on the moving body 1000.

As above, the present disclosure is described with the embodiment; however, the present disclosure is not limited to the foregoing embodiment, etc., and various modifications are possible. For example, in the foregoing embodiment, an automobile is provided as an example of the moving body 1000. However, the moving body 1000 may be, for example, a vehicle such as a motorcycle or a bicycle, or may be a shopping cart, a bag for hand luggage, etc.

It is to be noted that the effects described in this specification are merely an example. The effects of the present disclosure are not limited to those described in this specification. The present disclosure may have effects other than those described in this specification.

For example, the present disclosure may have the following configurations.
(1) An advertisement consideration calculating system including:
   a receiving section that receives location information and time information of a moving body; and
   a determining section that determines a consideration for advertisement posting on the moving body on the basis of the location information and the time information received by the receiving section.
(2) The advertisement consideration calculating system according to (1), in which
   the receiving section receives identification information of the moving body together with the location information and the time information, and
   the determining section determines the consideration in a case where there is registered identification information that matches the identification information received by the receiving section in a storage section that stores therein pieces of registered identification information of multiple registered moving bodies registered as advertising media.
(3) The advertisement consideration calculating system according to (1) or (2), further including a transmitting section that transmits information on the consideration determined by the determining section.
(4) The advertisement consideration calculating system according to (2), further including a transmitting section that transmits information on the consideration determined by the determining section, in which
   the storage section stores therein, with respect to each of the pieces of registered identification information, registered destination information associated with each of the pieces of registered identification information, and
   the transmitting section transmits information on the consideration on the basis of the registered destination information.
(5) The advertisement consideration calculating system according to any one of (1) to (4), in which in a case where the location information and the time information fall under a privilege condition, the determining section increases the consideration as compared with a case where the location information and the time information do not fall under the privilege condition.
(6) The advertisement consideration calculating system according to (4), in which the receiving section receives the identification information and the destination information of the moving body, and causes the received registration information and the received destination information to be stored, as registered identification information and registered destination information of the registered moving bodies, in the storage section.
(7) The advertisement consideration calculating system according to any one of (4) to (6), in which
   the storage section stores therein information on, out of a traveling area and a traveling distance, at least the traveling area as demand information, and
   the transmitting section transmits the demand information on the basis of the registered destination information.
(8) The advertisement consideration calculating system according to any one of (4) to (7), in which
   the storage section stores therein image data for an advertisement and printing office information on a printing office that is able to perform printing based on the image data or print data obtained by converting the image data,
   the determining section determines, on the basis of the registered identification information and the printing office information, a printing office suitable for carrying out printing based on the image data or the print data, and
   the transmitting section transmits the image data or the print data on the basis of the printing office information of the printing office determined by the determining section.
(9) The advertisement consideration calculating system according to (8), in which the print data has a data format suitable for printing on a recording layer including leuco dye.
(10) A terminal unit including:
   a transmitting section that transmits location information and time information of a moving body to an external device that determines a consideration for advertisement posting on the moving body on the basis of the location information and the time information; and
   a receiving section that receives information on the consideration from the external device.
(11) The terminal unit according to (10), further including an accepting section that accepts identification information and destination information of the moving body,
   in which the transmitting section transmits, to a storage section, the identification information and the destination information accepted by the accepting section.
(12) The terminal unit according to (10) or (11), further including a display section that displays thereon information on the consideration received by the receiving section.
(13) The terminal unit according to any one of (10) to (12), in which the receiving section receives, as demand information, information on at least one of a traveling area, a traveling route, a traveling time slot, a traveling speed, or a traveling day of week, from the external device.
(14) The terminal unit according to (13), further including a display section that displays thereon the demand information received by the receiving section.

This application claims the benefit of Japanese Priority Patent Application JP2016-223926 filed with the Japan Patent Office on November 17, 2016, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. An advertisement consideration calculating system comprising:
a receiving section that receives location information and time information of a moving body; and
a determining section that determines a consideration for advertisement posting on the moving body on a basis of the location information and the time information received by the receiving section.

2. The advertisement consideration calculating system according to claim 1, wherein
the receiving section receives identification information of the moving body together with the location information and the time information, and
the determining section determines the consideration in a case where there is registered identification information that matches the identification information received by the receiving section in a storage section that stores therein pieces of registered identification information of multiple registered moving bodies registered as advertising media.

3. The advertisement consideration calculating system according to claim 1, further comprising a transmitting section that transmits information on the consideration determined by the determining section.

4. The advertisement consideration calculating system according to claim 2, further comprising a transmitting section that transmits information on the consideration determined by the determining section, wherein
the storage section stores therein, with respect to each of the pieces of registered identification information, registered destination information associated with each of the pieces of registered identification information, and
the transmitting section transmits information on the consideration on a basis of the registered destination information.

5. The advertisement consideration calculating system according to claim 1, wherein in a case where the location information and the time information fall under a privilege condition, the determining section increases the consideration as compared with a case where the location information and the time information do not fall under the privilege condition.

6. The advertisement consideration calculating system according to claim 4, wherein the receiving section receives the identification information and the destination information of the moving body, and causes the received registration information and the received destination information to be stored, as registered identification information and registered destination information of the registered moving bodies, in the storage section.

7. The advertisement consideration calculating system according to claim 4, wherein
the storage section stores therein information on, out of a traveling area and a traveling distance, at least the traveling area as demand information, and
the transmitting section transmits the demand information on a basis of the registered destination information.

8. The advertisement consideration calculating system according to claim 4, wherein
the storage section stores therein image data for an advertisement and printing office information on a printing office that is able to perform printing based on the image data or print data obtained by converting the image data,
the determining section determines, on a basis of the registered identification information and the printing office information, a printing office suitable for carrying out printing based on the image data or the print data, and
the transmitting section transmits the image data or the print data on a basis of the printing office information of the printing office determined by the determining section.

9. The advertisement consideration calculating system according to claim 8, wherein the print data has a data format suitable for printing on a recording layer including leuco dye.

10. A terminal unit comprising:
a transmitting section that transmits location information and time information of a moving body to an external device that determines a consideration for advertisement posting on the moving body on a basis of the location information and the time information; and
a receiving section that receives information on the consideration from the external device.

11. The terminal unit according to claim 10, further comprising an accepting section that accepts identification information and destination information of the moving body,
wherein the transmitting section transmits, to a storage section, the identification information and the destination information accepted by the accepting section.

12. The terminal unit according to claim 10, further comprising a display section that displays thereon information on the consideration received by the receiving section.

13. The terminal unit according to claim 10, wherein the receiving section receives, as demand information, information on at least one of a traveling area, a traveling route, a traveling time slot, a traveling speed, or a traveling day of week, from the external device.

14. The terminal unit according to claim 13, further comprising a display section that displays thereon the demand information received by the receiving section.
